(19) **Europäisches Patentamt**
**European Patent Office**
**Office européen des brevets**

(11) **EP 3 929 251 A1**

(12) **EUROPÄISCHE PATENTANMELDUNG**

(43) Veröffentlichungstag:
**29.12.2021 Patentblatt 2021/52**

(21) Anmeldenummer: **20181497.7**

(22) Anmeldetag: **22.06.2020**

(51) Int Cl.:
**C08L 91/00** (2006.01)　　　**C09D 191/00** (2006.01)
**A01N 65/00** (2009.01)　　　**B41M 1/06** (2006.01)
**C09D 11/12** (2006.01)　　　**C09D 175/04** (2006.01)
**C10M 105/42** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Clariant International Ltd**
**4132 Muttenz (CH)**

(72) Erfinder:
• **WUNDLECHNER, Milena**
**86690 Mertingen (DE)**

• **BODENDORFER, Simon**
**86152 Augsburg (DE)**
• **KRATZER, Philipp**
**86368 Gersthofen (DE)**
• **BROEHMER, Dr. Manuel**
**82194 Gröbenzell (DE)**
• **NIEDERLEITNER, Tobias**
**86707 Westendorf (DE)**

(74) Vertreter: **Silber, Anton**
**Clariant Produkte (Deutschland) GmbH**
**IPM / Patent & License Management**
**Arabellastrasse 4a**
**81925 München (DE)**

(54) **BIOBASIERTE ADDITIVE AUF BASIS VON MIKRONISIERTEN REISKLEIEWACHSEN**

(57) Die Erfindung betrifft Reiskleiewachsoxidate, die optional derivatisiert wurden sowie mikronisierte Wachsadditive (mWA), umfassend optional derivatisierte Reiskleiewachsoxidat, mit einer volumenmittleren Partikelgröße $d_{50}$ zwischen 1 und 50 $\mu$m, deren Herstellung und deren Verwendung in Druckfarben, Lacken und Beschichtungen.

EP 3 929 251 A1

**Beschreibung**

Die Erfindung betrifft mikronisierte Reiskleiewachsoxidate, auf diesen basierende mikronisierte Wachsadditive insbesondere für Druckfarben, Lacke und Beschichtungen, deren Herstellung sowie deren Verwendung

Mikronisierte Wachsadditive (mWAs) werden beispielsweise in Druckfarben, Lacken und Beschichtungen in Mengen zwischen 0,5 und 5,0 Gew.-% angewendet, um diesen bestimmte Eigenschaften zu verleihen oder sie zu verbessern. Solche Eigenschaften sind beispielsweise Glanz oder Mattierung, Kratzbeständigkeit, Scheuerbeständigkeit, Gleitreibung und Haptik. Gegenüber nicht-mikronisierten Wachsadditiven bieten mikronisierte Wachsadditive den Vorteil, dass man sie entweder direkt oder in Form einer auf kaltem Weg hergestellten Dispersion zusetzen kann.

Als mikronisierte Wachsadditive werden Additive bezeichnet, die Wachse enthalten oder aus diesen bestehen, und die eine volumenmittlere Partikelgröße ($d_{50}$) zwischen 1 und 50 $\mu$m aufweisen. Üblicherweise werden zur Herstellung der mikronisierten Wachsadditive Wachse auf fossiler oder teilweise fossiler Rohstoffbasis eingesetzt, wie beispielsweise Montanwachse, Polyolefinwachse, Fischer-Tropsch-Wachse, Amidwachse oder Mischungen dieser Wachse. Neben Wachsen können mikronisierte Wachsadditive weitere Bestandteile enthalten. Als weitere Bestandteile können mikronisierte Wachsadditive beispielsweise synthetische Polymere (z.B. PTFE, Polyethylen, Polypropylen), Biopolymere (z.B. Zucker), anorganische Verbindungen (z.B. Diamantstaub) und Mahlhilfsmittel (z.B. Polyole) enthalten.

Für die Herstellung mikronisierter Wachse gibt es grundsätzlich zwei Verfahren. Das erste Verfahren ist ein Sprühprozess, bei dem man eine heiße Wachsschmelze durch eine Düse presst und das so erhaltene Wachspulver, falls erforderlich, einem Sichtungsprozess unterzieht.

Das zweite Verfahren ist ein Mahlprozess, wobei in Pastillen-, Schuppen- oder Pulverform vorliegende Wachse mittels spezieller Mahlaggregate, z.B. Strahlmühlen oder mechanische Mühlen mit integrierter Sichtung, mikronisiert werden.

In Druckfarben, Lacken und Beschichtungen kommen mikronisierte Wachse beider Herstellungsverfahren zum Einsatz.

Die bisher für die Herstellung mikronisierter Wachsadditive eingesetzten Wachse sind überwiegend fossilen Ursprungs und zeigen, mit Ausnahme der ebenfalls fossilen Montanwachse, keine oder nur sehr langsame Bioabbaubarkeit. Nachhaltige Alternativen sind aus verschiedenen Gründen kaum vorhanden. Viele Naturwachse sind weich, besitzen hohe Öl - oder Harzanteile und können deshalb entweder gar nicht mikronisiert werden (z.B. Bienenwachs) oder kleben als mikronisiertes Produkt wieder leicht zusammen und bilden bei geringstem Einfluss von Wärme oder Druck Agglomerate, die dann nur noch schlechte Dispergierbarkeit zeigen.

Neben anderen Wachsen basierend auf nachwachsenden Rohstoffen wurde die Verwendung von nicht-mikronisiertem Reiskleiewachs teilweise in Druckfarben und elektrophotographischen Tonern beschrieben (JP-A 2010-020304; 2010).

Reiskleiewachse bestehen hauptsächlich aus Monoestern langkettiger, gesättigter, unverzweigter Monocarbonsäuren mit langkettigen, unverzweigten, aliphatischen Monoalkoholen (nachfolgend auch "genuine Ester" genannt). Vorherrschend sind im Säureanteil der Reiskleiewachs-Ester Behen- und Lignocerinsäure mit den Kettenlängen C22 und C24, und im Alkoholanteil der Reiskleiewachs-Ester die Kettenlängen C26, C28, C30, C32 und C34.

Der Gehalt an Wachsestern im entölten, rohen oder zusätzlich raffinierten Reiskleiewachs liegt in der Regel bei größer als 96 Gew.-%. In nicht-entöltem Reiskleiewachs kann der Gehalt an Wachsestern, je nach Gehalt des Reiskleieöls, auch bei nur 50 Gew.-% liegen. Daneben kann das Wachs freie Fettsäuren und weitere Bestandteile wie Phosphorlipide und Sterylester enthalten. Weitere als "Mindermengen-Bestandteile" anzusehende variable Bestandteile des Reiskleiewachses sind die nicht näher spezifizierten "Dunkelstoffe", Squalen sowie der sogenannte "Gum-Anteil". Diese Komponenten führen meist zu einer in Farbe und Anwendbarkeit schwankenden und schwer zu reproduzierenden Produktqualität.

Als übliche Technik zur Aufhellung der entölten, rohen Reiskleiewachse gilt die klassische Bleichung mit Wasserstoffperoxid. Wasserstoffperoxid-gebleichte Reiskleiewachse sind gelblich und entsprechen in ihrem Estergehalt und in ihrer Säurezahl weitgehend den Ausgangswachsen. Solche Typen werden überwiegend als entölte und raffinierte Reiskleiewachse am Markt angeboten, zeigen jedoch, da die Mindermengen-Bestandteile im Produkt verbleiben, ebenfalls schwankende Produktqualität.

Oxidationsprodukte von Reiskleiewachs und deren Folgeprodukte sind aus der EP-A 2909273 aus 2015 bekannt. Sie werden durch Oxidation mit Chromschwefelsäure hergestellt. Hierdurch können Säurewachse in einem sehr hohen Säurezahlenbereich zwischen 70 mg KOH/g und 160 mg KOH/g erreicht werden. Diese können im Anschluss mit einem basischen Metallsalz teil- bzw. vollverseift werden, oder mit einem mono- oder polyvalenten Alkohol verestert werden.

Bei der Oxidation des Reiswachses mit Chromsäure kommt es im Wesentlichen zu einer Spaltung der Wachsester sowie einer in-situ-Oxidation der entstandenen Wachsalkohole zu Wachssäuren. Die Höhe der Säurezahl ist ein Maß für den Gehalt an freien Wachssäuren. Die typischen Umsätze solcher Oxidationen liegen im Bereich von 10-90% bezüglich der Estergruppen. Die auf diese Weise gebleichten Naturwachse besitzen zusätzlich zur gewünschten Aufhellung eine höhere Verseifungszahl und Säurezahl als die ungebleichten Wachse.

Es besteht ein großer Bedarf nach biobasierten und bioabbaubaren Komponenten für nachhaltige Druckfarben, Lacke und Beschichtungen, die nicht die oben beschriebenen Nachteile bzgl. der Mikronisierbarkeit oder Agglomeratbildung zeigen.

Überraschenderweise wurde nun gefunden, dass sich oxidierte Reiskleiewachse und deren Derivate (im Folgenden als Reiskleiewachsoxidate, RWO, bezeichnet) effizient zu mikronisierten Reiskleiewachsoxidaten sowie mikronisierten Wachsadditiven (mWA), umfassend Reiskleiewachsoxidate, vermahlen oder versprühen lassen. Sie eignen sich zur Einstellung von Glanz oder Mattierung, und zur Verbesserung von Kratzbeständigkeit, Scheuerbeständigkeit, Gleitreibung und Haptik in Druckfarben, Lacken und Beschichtungen.

Gegenstand der Erfindung sind daher Reiskleiewachsoxidate, die optional derivatisiert wurden, mit einer volumenmittleren Partikelgröße $d_{50}$ (bestimmt nach ISO 13320-1) zwischen 1 und 50 $\mu$m, bevorzugt zwischen 5 und 15 $\mu$m, besonders bevorzugt von 7,0 und 13,0 $\mu$m sowie mikronisierte Wachsadditive (mWA), umfassend Reiskleiewachsoxidate und/oder derivatisierte Reiskleiewachsoxidate, mit einer volumenmittleren Partikelgröße $d_{50}$ zwischen 1 und 50 $\mu$m bevorzugt zwischen 5 und 15 $\mu$m, ganz besonders bevorzugt von 7,0 und 13,0 $\mu$m.

Unter Reiskleiewachsoxidaten, die optional derivatisiert wurden sind Reiskleiewachsoxidate zu verstehen, die nach der Oxidation entweder als freies Säurewachs vorliegen oder in einem nachfolgenden Schritt teilweise oder vollständig derivatisiert wurden und weiterhin auf eine volumenmittlere Partikelgröße $d_{50}$ (nach ISO 13320-1) von höchstens 50 $\mu$m mikronisiert wurden.

Ein zur Derivatisierung geeignetes Verfahren ist ein Verfahren ausgewählt aus der Gruppe umfassend Hydrolyse, Alkoholyse, Veresterung, Amidierung, Verseifung, Ethoxylierung, Anhydridbildung und Decarboxylierung. Falls es sich bei dem Derivatisierungsverfahren um eine Verseifung handelt, wird beispielsweise mit einem basischen Metallsalz, ausgewählt aus der Gruppe bestehend aus Metallhydroxiden (z.B. NaOH, KOH, Ca(OH)2 und Zn(OH)2, etc.), Metalloxiden (z.B. CaO, etc.), Metallcarbonaten (z.B. Na2CO3, CaCO3, etc.) und wässrigen Laugen (wie z.B. NaOH, KOH, etc.) verseift.

Bevorzugt wird mit Metallhydroxiden, ausgewählt aus der Gruppe bestehend aus NaOH, KOH, Ca(OH)2 und Zn(OH)2, oder CaO, oder Metallcarbonaten, ausgewählt aus der Gruppe bestehend aus Na2CO3 und CaCO3, oder mit wässrigen Laugen, ausgewählt aus der Gruppe bestehend aus NaOH und KOH, verseift, besonders bevorzugt mit Calciumhydroxiden, -oxiden, oder -carbonaten.

Vorzugsweise besitzen die optional derivatisierten Reiskleiewachsoxidate, eine Säurezahl (nach ISO 2114) von 1 - 140 mg KOH/g, bevorzugt zwischen 2 und 80 mg KOH/g, besonders bevorzugt zwischen 3 und 60 mg KOH/g.

Bevorzugt weisen die optional derivatisierten Reiskleiewachsoxidate eine Verseifungszahl (nach ISO 3681) zwischen 30 und 185 mg KOH/g, bevorzugt zwischen 50 und 130 mg KOH /g, besonders bevorzugt zwischen 60 und 110 mg KOH/g auf.

Vorzugsweise weisen die optional derivatisierten Reiskleiewachsoxidate einen Tropfpunkt (nach ISO 2176) zwischen 70 und 110 °C auf.

In einer bevorzugten Ausführungsform haben die optional derivatisierten Reiskleiewachsoxidate eine Dichte zwischen 0,960 und 1,020 g/cm3, bevorzugt von 0,960 - 1,010 g/cm$^3$, besonders bevorzugt von 0,960 bis 1,000 g/cm$^3$.

Bei den optional derivatisierten Reiskleiewachsoxidaten handelt es sich vorzugsweise um Oxidationsprodukte von Reiskleiewachs mit Chromschwefelsäure und/oder deren Derivatisierungsprodukte bevorzugt deren Verseifungsprodukte, oder um eine Mischung aus einem Oxidationsprodukten von Reiskleiewachs mit Chromschwefelsäure und/oder deren Derivatisierungsprodukte, bevorzugt deren Verseifungsprodukte. Besonders bevorzugt werden die optional derivatisierten Reiskleiewachsoxidate mit einer Mischung aus Chromtrioxid und Schwefelsäure hergestellt.

Weiterhin umfasst die Erfindung ein mikronisiertes Wachsadditiv für Druckfarben, Beschichtungen und Lacke, das ein oder mehrere, optional derivatisierte Reiskleiewachsoxidate umfasst oder aus einem oder mehreren dieser optional derivatisierten Reiskleiewachsoxidate besteht.

Vorzugsweise enthält das mikronisierte Wachsadditiv zu 40 - 100 Gew.-%, ein oder mehrere, optional derivatisierte Reiskleiewachsoxidate, besonders bevorzugt zu 95 - 100 Gew.-%, ganz besonders bevorzugt zu 100 Gew.-%, bezogen auf die Gesamtmasse des mikronisierten Wachsadditivs.

Bevorzugt weist das mikronisierte Wachsadditiv einen Renewable Carbon Index (RCI, vgl. Tabelle 1) zwischen 80 und 100%, besonders bevorzugt von 100% auf.

Weiterer Gegenstand der Erfindung ist ein Verfahren zur Herstellung von optional derivatisierten Reiskleiewachsoxidaten oder von einem mikronisierten Wachsadditiv für Druckfarben, Lacke und Beschichtungen mit einer volumenmittleren Partikelgröße $d_{50}$ zwischen 1 und 50 $\mu$m bevorzugt zwischen 5 und 15 $\mu$m, ganz besonders bevorzugt von 7,0 - 13,0 $\mu$m, durch Vermahlung auf einer Mühle, bevorzugt auf einer Pralltellermühle oder auf einer Luftstrahlmühle, besonders bevorzugt auf einer Luftstrahlmühle hergestellt.

In einer alternativen Ausführungsform wird das mikronisierte Wachsadditiv durch Vermahlung einer Mischung unvermahlener Rohstoffe, enthaltend ein oder mehrere unvermahlene, optional derivatisierte Reiskleiewachsoxidate, auf einer Pralltellermühle oder auf einer Luftstrahlmühle, besonders bevorzugt auf einer Luftstrahlmühle hergestellt.

Weitere unvermahlene Rohstoffe können beispielsweise synthetische Polymere (z.B. PTFE, Polyethylen, Polypropylen), teilsynthetische Wachse (z.B. Amidwachs), Biopolymere (z.B. Zucker), anorganische Verbindungen (z.B. Diamantstaub), Mahlhilfsmittel (z.B. Polyole) und Stabilisatoren sein

Die Mischung unvermahlener Rohstoffe kann eine Schmelzmischung der unvermahlenen Rohstoffe sein und liegt dann bevorzugt in Form von Pastillen, Schuppen oder Pulver vor.

Die Mischung unvermahlener Rohstoffe kann auch eine physikalische Mischung der unvermahlenen Rohstoffe sein, wobei dann jede Einzelkomponente bevorzugt in Form von Pastillen, Schuppen oder Pulver vorliegt.

Die physikalische Mischung unvermahlener Rohstoffe kann bereits vorgemischt in den Mahlraum gebracht werden, oder getrennt dosiert werden, sodass die physikalische Mischung unvermahlener Rohstoffe im Mahlraum vorliegt.

In einer weiteren Ausführungsform werden die unvermahlenen Rohstoffe zunächst getrennt voneinander vermahlen. Die mikronisierten Rohstoffe, umfassend optional verseifte Reiskleiewachsoxidate werden anschließend durch physikalische Vermischung zu einem mikronisierten Wachsadditiv zusammengefügt.

Weiterer Gegenstand der Erfindung ist die Verwendung von mikronisiertem Wachsadditiv, umfassend ein oder mehrere optional derivatisierte Reiskleiewachsoxidate in Druckfarben, Beschichtungen oder in Lacken.

Dort werden sie bevorzugt als Kratz- und Scheuerschutz und als Glanz- oder Mattierungsmittel für Druckfarben, Beschichtungen und Lacke eingesetzt.

Bei den Druckfarben handelt es sich bevorzugt um Druckfarben für Hochdruck- (z.B. Flexodruck), Flachdruck- (z.B. Offsetdruck), Tiefdruck-, Durchdruck (z.B. Siebdruck) oder elektronische Druckverfahren (Non-Impact Printing wie z.B. Inkjet oder Laserdruck).

Vorzugsweise handelt es sich bei den Druckfarben um wasserbasierte, lösemittelbasierte, ölbasierte oder sogenannte 100 %-Systeme (z.B. UV-härtende oder Pulversysteme), wie beispielsweise Offset-Druckfarben oder Flexodruckfarben. Bevorzugt handelt es sich um ölbasierte Offset-Druckfarben oder wasserbasierte Flexodruckfarben.

Bevorzugt handelt es sich bei den Lacken um Pulverlacke oder um physikalisch trocknende (wasser- oder lösemittelbasierend) und/oder Reaktivsysteme (z.B. 2K-Systeme, thermisch vernetzende Systeme, UV-Systeme). Besonders bevorzugt handelt es sich um ein wasserbasiertes 1K PUR Lacksystem und ein lösemittelbasiertes 2K PUR Lacksystem, welches vorzugsweise in Holzlacken Verwendung findet.

Bevorzugt wird das mikronisierte Wachsadditiv in einer Menge von 0,1 - 10,0% Gew.-%, bezogen auf die Gesamtmasse der Druckfarbe, Beschichtung oder Lacks eingesetzt, besonders bevorzugt in einer Menge von 0,2 - 4,0% Gew.-%.

In einer Ausführungsform wird das mikronisierte Wachsadditiv direkt zur Druckfarbe, Beschichtungen oder zum Lack zugegeben.

In einer alternativen Ausführungsform wird eine Dispersion des mikronisierten Wachsadditivs zur Druckfarbe, zur Beschichtung oder zum Lack gegeben. Bevorzugt handelt es sich bei dem Dispergens um Wasser.

In weiteren alternativen Verwendungen werden die mikronisierten Wachsadditive als Entgasungs-, Verlaufs-, Gleit- und/oder Dispergierungshilfsmittel für Kunststoffe eingesetzt oder als Hydrophobierungsmittel in Pflanzenschutzpräparationen eingesetzt.

**Substanzcharakterisierung**

Die in **Error! Reference source not found.** aufgeführten Standardmethoden dienen zur Bestimmung der Kennzahlen von natürlichen und synthetischen Wachsen und der Kennzahlen von Druckfarben, Lacken und Beschichtungen. Sie werden zur Charakterisierung der erfindungsgemäßen mikronisierten Reiskleiewachsoxidate, ihrer Ausgangsprodukte und der Vergleichssubstanzen verwendet.

Tabelle 1: Methodenübersicht

|  | Methode |
| --- | --- |
| Partikelgrößenbestimmung [$\mu$m] | ISO 13320-1 |
| Dichte [g/cm$^3$] | ISO 1183-3 |
| Glanz 60° | Die Bestimmung des Glanzgrads erfolgte mit einem micro-TRI-gloss-$\mu$-Glanzmessgerät (BYK-Gardner GmbH). |

(fortgesetzt)

| | Methode |
|---|---|
| Gleitreibung | Der Gleitreibungskoeffizient wurde mit einem Friction-Peel Tester, Model 225-1, der Firma Thwing-Albert Instruments Company in Anlehnung an die ASTM-Methode D2534 ermittelt. Dazu wurde eine mit dem zu testenden Lack beschichtete Glasplatten auf das Analysengerät aufgebracht. Anschließend wurde ein mit Leder bezogener Metallschlitten (349g) auf die beschichtete Oberfläche aufgesetzt. Der Schlitten wurde anschließend mit konstanter Geschwindigkeit (15cm/min) über die beschichtete Glasoberfläche gezogen. Gemessen wurde die Kraft, die benötigt wird, um den Schlitten zu ziehen. Da der dynamische Gleitreibungskoeffizient ermittelt wurde, |
| | konnte die Anfangskraft, welche benötigt wird, um den Schlitten in Bewegung zu setzen, vernachlässigt werden. |
| Scheuerfestigkeit | Die Bestimmung der Scheuerfestigkeit erfolgte mit einem Quarant-Prüfaufbau. Als Gegensubstrat wurde nicht bedrucktes Papier verwendet, um das Scheuern in einem Papierstapel zu simulieren. Die Scheuerprüfung erfolgte mit einer Scheuerbelastung von 0,48 N/cm$^2$, einer Scheuergeschwindigkeit von 15 cm/sec und nach 50 Hüben. Beurteilt wurde die Intensität der durch das Scheuern auf das Gegenpapier übertragenen Farbe: $\Delta$ E Farbdifferenz nach DIN 6174 |
| Kratzbeständigkeit | Zur Bestimmung der Kratzbeständigkeit wurde das zu prüfende Lacksystem auf eine Glasoberfläche aufgetragen und mit einem Härteprüfstab der Firma Erichsen (TYP 318) getestet. Die Kratzbeständigkeit wurde in Anlehnung an DIN ISO 1518 mit dem Härteprüfstab und einer Gravierspitze nach Bosch mit einem Durchmesser von 0,75 mm bestimmt. Die Kratzspur sollte ca. 10 mm lang sein und eine deutliche Markierung im Lack hinterlassen. Durch Justierung der Federspannung können verschiedene Kräfte auf die Lackoberfläche ausgeübt werden. Die maximale Kraft, die noch keine deutliche Markierung im Lack hinterlässt, wurde für unterschiedlichste Lackformulierungen bestimmt. Die Kraftmessung erfolgt in Schritten von 0,1 N. |
| Haptik | Holzlackoberflächen wurden in einem geschlossenen Kasten befühlt und abstufend nach der Sensorik mit den Noten A, B, C bewertet, wobei A eine positive Sensorik vermittelt und C eine negative Sensorik. |
| Säurezahl (SZ) [mg KOH/g] | ISO 2114 |
| Verseifungszahl (VZ) [mg KOH/g] | ISO 3681 |
| Tropfpunkt (TP) [°C] | ISO 2176 |
| Nadelpenetrationszahl (NPZ) [mm$^{-1}$] | DIN 51579 |
| Viskosität (Vis) [mPas] | DIN 53019 bei 100 °C bestimmt, wenn nicht anders angegeben |
| Hydroxylzahl (OHZ) [mg KOH/g] | DGF M-IV 6 |
| Thermogravimetrische Analyse (TGA) [Gew.-%] | DIN 51006<br>Von 25 bis 300°C bei 5K/min, dann 30 min bei 300°C. Messung des Massenverlusts bei Erreichen von 300°C und nach 30 min bei 300°C. |

(fortgesetzt)

| | Methode |
|---|---|
| Renewable Carbon Index | Der Renewable Carbon Index (RCI) beschreibt den Anteil von Kohlenstoffatomen aus nachwachsenden Rohstoffen in einer organischen Verbindung oder Mischung und wird nach folgender Formel berechnet:<br><br>$$RCI\ (\%)$$<br>$$= \frac{\sum_{i=1}^{n}(M_{total} * M_i * BCC_i * 12\ /MW_i)}{\sum_{i=1}^{n}(M_{total} * M_i * BCC_i * 12\ /MW_i) + \sum_{i=1}^{n}(M_{total} * M_i * F($$<br><br>- $M_{total}$ = Gesamtmasse des mikronisierten Wachsadditivs<br>- $M_i$ = Masse der i-ten Komponente des mikronisierten Wachsadditivs (in %)<br>- $BCC_i$ = Anzahl biobasierter Kohlenstoffatome der i-ten Komponente des mikronisierten Wachsadditivs<br>- $FCC_i$ = Anzahl fossiler Kohlenstoffatome der i-ten Komponente des mikronisierten Wachsadditivs<br>- $MW_i$ = Molmasse der i-ten Komponente des mikronisierten Wachsadditivs |
| | Anorganische Komponenten und Wasser werden bei der Berechnung des RCI nicht berücksichtigt. |
| Durchsatzmessung | Für die Durchsatzmessung in der Labormühle wurde unter konstanten Bedingungen der Durchsatz des Rohstoffes in einer definierten Zeit, hier 30 min, bestimmt. Dafür wurde das erhaltene Mikronisat auf einer Waage ausgewogen und der Durchsatz in Gramm/Stunde dokumentiert. Der Durchsatz dient hier als Indikator für die Mahlbarkeit der ein gesetzten Rohstoffe/Reiskleiewachsoxidate. |

Die Vermahlung der Reiskleiewachsoxidate erfolgte auf folgender Luftstrahlmühle:

Tabelle 2: Luftstrahlmühle

| Gerät: | Hosokawa Alpine Multiprozessanlage 100 AFG/50ZPS/50 AFP |
|---|---|
| Füllvolumen: | ca. 0.8 dm$^3$ |
| Mahlluftmenge: | ca. 80 m$^3$/h |
| Durchmesser Sichter: | 50 mm |
| Drehzahl Sichter: | max. 22000 min$^{-1}$ |
| Spezifikationen Sichter: | Schaufelkranz eingesetzt mit 8 Stück spiralig angeordneten Schaufeln |

Die erfindungsgemäßen, optional derivatisierten Reiskleiewachsoxidate, wie in Tabelle 3 aufgeführt, wurden durch Vermahlung auf der in Tabelle 2 dargestellten Mühle Luftstrahlmühle hergestellt.

Tabelle 3: Physikalisch-chemische Eigenschaften der erfindungsgemäßen (Erf.) mikronisierten Reiskleiewachsoxidate

| Probe | Bezeich -nung | TP [°C] | SZ [mg KOH/g] | VZ [mg KOH/g] | OHZ [mg KOH/g] | Dichte [g/cm$^3$] | Viskosität [mPas] | TGA | NPZ [mm-1] | Durchsatz [g/h] | $d_{50}$ [µm] | $d_{90}$ [µm] |
|---|---|---|---|---|---|---|---|---|---|---|---|---|
| Erf. 1 | mWA 1 | 78 | 19 | 89 | 5 | 0,98 | 16 | 7,44/18,35 | 1 | 1000 | 8 | 14,6 |
| Erf. 2 | mWA 2 | 77 | 52 | 113 | 4 | 0,99 | 17 | 15,49/32,03 | 3 | 1876 | 7,5 | 19,3 |
| Erf. 3 | mWA 3 | 76 | 128 | 168 | 5 | 1,00 | 17 | - | 3 | 1464 | 7,4 | 13,3 |
| Erf. 4 | mWA 4 | 108 | 15 | 79 | 12 | 0,99 | 48 (120 °C) | 4,03/8,32 | 1 | 1594 | 8,1 | 15,5 |
| Erf. 5 | mWA 5 | 78 | 19 | 89 | 5 | 0,98 | 16 | 7,44/18,35 | 1 | 1916 | 12,4 | 24,7 |
| Erf. 6 | mWA 6 | 77 | 52 | 113 | 4 | 0,99 | 17 | 15,49/32,03 | 3 | 2462 | 11,9 | 23,4 |
| Erf. 7 | mWA 7 | 76 | 128 | 168 | 5 | 1,00 | 17 | - | 3 | 857 | 11,9 | 21,4 |
| Erf. 8 | mWA 8 | 108 | 15 | 79 | 12 | 0,99 | 48 (120 °C) | 4,03/8,32 | 1 | 984 | 11,7 | 21,7 |

Tabelle 4: Eingesetzte erfindungsgemäße (Erf. 1-8) und als Vergleichssubstanzen dienende (Vgl. 1- 13) mikronisierte Wachsadditive und deren Charakterisierung

| Probe | Bezeichnung | Hersteller | Chem. Zusammensetzung | $d_{50}$ [μm] | RCI [%] |
|---|---|---|---|---|---|
| Erf. 1 | mWA 1 | Entwicklungsmuster der Clariant | Reiskleiewachsoxidat | 8,0 | 100 |
| Erf. 2 | mWA 2 | Entwicklungsmuster der Clariant | Reiskleiewachsoxidat | 7,5 | 100 |
| Erf. 3 | mWA 3 | Entwicklungsmuster der Clariant | Reiskleiewachsoxidat | 7,4 | 100 |
| Erf. 4 | mWA 4 | Entwicklungsmuster der Clariant | teilverseiftes Reiskleiewachsoxidat | 8,1 | 100 |
| Erf. 5 | mWA 5 | Entwicklungsmuster der Clariant | Reiskleiewachsoxidat | 12,4 | 100 |
| Erf. 6 | mWA 6 | Entwicklungsmuster der Clariant | Reiskleiewachsoxidat | 11,9 | 100 |
| Erf. 7 | mWA 7 | Entwicklungsmuster der Clariant | Reiskleiewachsoxidat | 11,9 | 100 |
| Erf. 8 | mWA 8 | Entwicklungsmuster der Clariant | teilverseiftes Reiskleiewachsoxidat | 11,7 | 100 |
| Vgl. 1 | Ceridust 5551 | Clariant International Ltd. | teilverseiftes Montanwachs | 8,9 | 0 |
| Vgl. 1g | Ceridust 5551 | Clariant International Ltd. | teilverseiftes Montanwachs | 11,2 | 0 |
| Vgl. 2 | Ceridust 6050M | Clariant International Ltd. | Polypropylenwachs | 10,0 | 0 |
| Vgl. 3 | Ceridust 3715 | Clariant International Ltd. | polar modifiziertes Polyethylenwachs | 9,0 | 0 |
| Vgl. 3g | Ceridust 3715 | Clariant International Ltd. | polar modifiziertes Polyethylenwachs | 10,0 | 0 |
| Vgl. 4 | Ceridust 3910 | Clariant International Ltd. | Amidwachs | 6,3 | 94 |
| Vgl. 4g | Licowax C Micro-powder PM | Clariant International Ltd | Amidwachs | 11,3 | 94 |
| Vgl. 5 | Ceridust 3620 | Clariant International Ltd. | Polyethylenwachs | 8,1 | 0 |
| Vgl. 5g | Ceridust 3620 | Clariant International Ltd. | Polyethylenwachs | 11,3 | 0 |
| Vgl. 6 | Ceridust 9610 F | Clariant International Ltd. | PTFE modifiziertes Polyethylenwachs | 7,5 - 9,5 | 0 |
| Vgl. 7 | Ceridust 9615 A | Clariant International Ltd | Blend aus Polyethylenwachs und Amidwachs | 9,1 | 45 |
| Vgl. 7g | Ceridust 9615 A | Clariant International Ltd | Blend aus Polyethylenwachs und Amidwachs | 12,4 | 45 |
| Vgl. 8 | Lanco 1400 SF | The Lubrizol Corporation | Synthesewachs | 5,5 | 0 |

(fortgesetzt)

| Probe | Bezeichnung | Hersteller | Chem. Zusammensetzung | $d_{50}$ [μm] | RCI [%] |
|---|---|---|---|---|---|
| Vgl. 9 | MP 22XF | Micro Powders, Inc. | Synthesewachs | ~ 7 | 0 |
| Vgl. 10 | Ceretan MX 9820 | Münzing Chemie GmbH | Polyolefinwachs | < 7 | 0 |
| Vgl. 11 | Spray 30 | Sasol | Fischer- Tropsch-Wachs | <6 | 0 |

**Anwendungstechnische Prüfungen:**

**Beispiel 1: Flexodruckfarbe**

**Komponenten:**

| | | |
|---|---|---|
| **A)** Uni Q MB Blue 15.3 (12-111101-7.2260) (Fa. Siegwerk) | 20, 0 Gew.-% |
| Dest. Wasser | 10, 0 Gew.-% |
| **B)** Viacryl SC 175 W 40 WAIP | 35, 0 Gew.-% |
| Dest. Wasser | 35, 0 Gew.-% |
| | 100,0 Gew.-% |
| Zugabe von mWA | 0,5 Gew.-%/ 0,8 Gew.-% |

**Herstellung:**

Die Komponenten A und B wurden jeweils durch Verdünnen mit destilliertem Wasser hergestellt. Anschließend wurde Komponente A in einem großen Becherglas vorgelegt und Komponente B langsam unter Rühren mit einem Propellerrührer zugegeben. Die Mischung wurde am Propellerrührer bei 1200 rpm für mind. 30 min homogenisiert.

Der auf diese Weise hergestellten Grunddruckfarbe wurde das mikronisiertes Wachsadditiv in einer Konzentration von 0,5 Gew.-% bzw. 0,8 Gew.-% zugegeben. Die mikronisierten Wachsadditive wurden langsam bei 500 rpm im Dissolver zudosiert, und anschließend bei 2000 rpm für 20 min in die Druckfarbe eingearbeitet.

Der Andruck erfolgte nach mindestens 24 h (schaumfrei) durch einen vollflächigen Auftrag von 6 μm Nassfilmstärke auf Papier der Qualität Algro Finess 80g/m². Die Prüfung der Andruckstreifen erfolgte nach 48 h Trocknungszeit.

**Prüfung des erfindungsgemäßen mikronisierten Wachsadditivs in einer wässrigen Flexodruckfarbe:**

Die Wirkung des mikronisierten Wachsadditivs wird durch den Glanz, den Gleitreibungskoeffizienten sowie die Scheuerfestigkeit der oben angegebenen Richtformulierung quantifiziert. In Flexodruckfarben ist beim Glanz ein hoher Wert erstrebenswert. Beim Gleitreibungskoeffizienten und der relativen Scheuerfestigkeit, als Farbabrieb definiert, sind in Flexodruckfarben, geringere Werte wünschenswert.

Tabelle 5: Anwendungstechnische Daten einer Flexodruckfarbe

| Eingesetztes mWA (Probe) | Eingesetzte Menge (Gew.-%) | Glanz 60° | Gleitreibungskoeffizient (rel.) | Scheuerfestigkeit (rel.) |
|---|---|---|---|---|
| Erf. 1 | 0,5 | 40,7 | 0,16 | 3,30 |
| | 0,8 | 39,3 | 0,16 | 3,15 |
| Erf. 2 | 0,5 | 39,0 | 0,15 | 3,02 |
| | 0,8 | 37,8 | 0,15 | 3,11 |
| Erf. 3 | 0,5 | 40,0 | 0,14 | 2,88 |
| | 0,8 | 38,2 | 0,14 | 3,03 |

(fortgesetzt)

| Eingesetztes mWA (Probe) | Eingesetzte Menge (Gew.-%) | Glanz 60° | Gleitreibungskoeffizient (rel.) | Scheuerfestigkeit (rel.) |
|---|---|---|---|---|
| Erf. 4 | 0,5 | 40,1 | 0,15 | 3,11 |
| | 0,8 | 38,6 | 0,15 | 3,79 |
| Vgl. 5 | 0,5 | 38,5 | 0,23 | 3,53 |
| | 0,8 | 37,1 | 0,23 | 3,49 |
| Vgl. 6 | 0,5 | 33,1 | 0,21 | 3,66 |
| | 0,8 | 34,6 | 0,20 | 3,96 |
| Vgl. 1 | 0,5 | 35,4 | 0,16 | 3,26 |
| | 0,8 | 35,0 | 0,16 | 3,39 |
| Vgl. 4 | 0,5 | 36,0 | 0,16 | 3,30 |
| | 0,8 | 33,3 | 0,16 | 3,78 |
| Vgl. 11 | 0,5 | 34,4 | 0,17 | 3,58 |
| | 0,8 | 34,6 | 0,17 | 3,84 |
| Vgl. 10 | 0,5 | 35,1 | 0,17 | 3,91 |
| | 0,8 | 33,8 | 0,16 | 3,31 |

Die erfindungsgemäßen Beispiele aus Tabelle 5 (Erf. 1 - 4) zeigen im Vergleich mit den Vergleichssubstanzen (Vgl. 1/4/6/7/11/12) gleichzeitig einen höheren Glanz, einen geringen Gleitreibungskoeffizienten so wie eine bessere Scheuerfestigkeit der hergestellten Flexo-Druckfarbe.

**Beispiel 2: Offsetdruckfarbe**

**Komponenten:**

| A) F&E-5004 Cyan wachsfreie Öko-Farbe (Fa. Siegwerk) | 100 Gew.-% |
|---|---|
| B) Zugabe von mWA zur Grund-Offsetfarbe | 1,5 Gew.-% / 3,0 Gew.-% |

Die Grund-Offsetfarbe wurde mit dem mWA versetzt und bei 3000 rpm für 5 min im Speedmixer homogenisiert.
Der Andruck erfolgte an einer Offset-Labordruckanlage auf Offset-Papier mit einer Auftragsmenge von 10,0 $\pm$ 0,5 mg/m$^2$. Die Prüfung erfolgte nach 48 h Trocknungszeit im Klimaraum bei 23°C und einer Luftfeuchtigkeit von 50%.

**Prüfung des erfindungsgemäßen mikronisierten Wachsadditivs in einer Offset-Druckfarbe:**

Die Wirkung des mikronisierten Wachsadditivs in Offsetdruckfarben wird durch den Gleitreibungskoeffizient sowie die Scheuerfestigkeit in der oben angegebenen Richtformulierung quantifiziert. Beim Gleitreibungskoeffizienten und der relativen Scheuerfestigkeit, als Farbabrieb definiert, sind geringere Werte wünschenswert. Des Weiteren hat das mikronisierte Wachsadditiv einen Einfluss auf den Glanz.

Tabelle 6: Anwendungstechnische Daten einer Offsetdruckfarbe

| Eingesetztes mWA (Probe) | Eingesetzte Menge (Gew.-%) | Glanz 60° | Gleitreibungskoeffizient (rel.) | Scheuerfestigkeit (rel.) |
|---|---|---|---|---|
| Erf. 1 | 1,5 | 40 | 0,39 | 5,31 |
| | 3,0 | 29,8 | 0,36 | 3,36 |

(fortgesetzt)

| Eingesetztes mWA (Probe) | Eingesetzte Menge (Gew.-%) | Glanz 60° | Gleitreibungskoeffizient (rel.) | Scheuerfestigkeit (rel.) |
|---|---|---|---|---|
| Erf. 2 | 1,5 | 39,8 | 0,54 | 3,86 |
| | 3,0 | 41,5 | 0,25 | 4,44 |
| Erf. 4 | 1,5 | 35,8 | 0,37 | 4,51 |
| | 3,0 | 41,8 | 0,34 | 4,12 |
| Vgl. 5 | 1,5 | 48,7 | 0,45 | 3,60 |
| | 3,0 | 43,4 | 0,42 | 3,37 |
| Vgl. 4 | 1,5 | 44,4 | 0,54 | 15,06 |
| | 3,0 | 44,2 | 0,3 | 14,51 |
| Vgl. 1 | 1,5 | 43,1 | 0,57 | 13,40 |
| | 3,0 | 45,6 | 0,30 | 8,52 |

Die erfindungsgemäßen Beispiele (Erf. 1/2/4) aus Tabelle 6 zeigen im Vergleich mit den Vergleichssubstanzen (Vgl. 1/4/6) gleichzeitig einen verringerten Glanz, erniedrigter relativer Gleitreibungskoeffizienten so wie eine bessere Scheuerfestigkeit der hergestellten Offsetdruckfarbe.

**Beispiel 3: Wässriger 1-K PUR-Lack**

**Komponenten:**

|  |  |
|---|---|
| a) Bayhydrol UH 2342 | 91,0 Gew.-% |
| b) Entmineralisiertes Wasser | 3,1 Gew.-% |
| c) Dipropylenglykoldimethylether | 3,1 Gew.-% |
| d) BYK 028 | 0,8 Gew.-% |
| e) BYK 347 | 0,5 Gew.-% |
| f) Schwego Pur 6750 5%ig in Wasser | 1.5 Gew.-% |
| | 100,0 Gew.-% |
| Zugabe von mWA | 2,0/4,0 Gew.-% |

Für die Herstellung des Lackes wurden die Komponenten a) bis f) in der angegebenen Reihenfolge an einem Propellerrührer gemischt. Die Rührzeit betrug mind. 20 min bei ca. 1000 rpm.

Dem auf diese Weise hergestellten Lack wurden im Dissolver bei 500 rpm mikronisiertem Wachsadditiv in einer Konzentration von 2 % bzw. 4 % zugegeben. Das mikronisierte Wachsadditiv wurde an einem Dissolver bei 2000 rpm für 20 min eingearbeitet.

Zur Herstellung der Proben wurden Nassfilme von 60 $\mu$m auf Glasplatten aufgerakelt. Die Prüfkörper zur Prüfung der Haptik wurden durch einen dreischichtigen (Kreuzgang) Pinselauftrag mit Zwischenschliff auf unbehandelte Vollholzplatten hergestellt.

Die Prüfung erfolgte nach 48 h im Klimaraum bei 23°C und einer Luftfeuchtigkeit von 50%.

**Prüfung des erfindungsgemäßen mikronisierten Wachsadditivs in einem wässrigen 1-komponentigen PUR Lackes:**

Die Wirkung des mikronisierten Wachsadditivs wird durch den Gleitreibungskoeffizient sowie die Scheuerfestigkeit in der oben angegebenen Richtformulierung quantifiziert. Bei Gleitreibungskoeffizienten sind in 1-K PUR-Lacken geringere Werte wünschenswert. Bei der Kratzbeständigkeit sind in 1-K PUR-Lacken hohe Werte wünschenswert. Des Weiteren hat mWA einen Einfluss auf den Glanz des 1-K PUR-Lacks.

Tabelle 7: Anwendungstest - 1K PU Lack, mWA mit $d_{50}$ von ca. 12 $\mu$m

| Eingesetztes mWA (Probe) | Eingesetzte Menge [Gew.-%] | Glanz @ 60° | Gleitreibungskoeffizient [rel.] | Kratzbeständigkeit | Haptik |
|---|---|---|---|---|---|
| Erf. 5 | 2,0 | 73,5 | 0,45 | 0,5 | A |
|  | 4,0 | 37,1 | 0,42 | 0,5 | A |
| Erf. 6 | 2,0 | 66,2 | 0,44 | 0,6 | A |
|  | 4,0 | 29,9 | 0,41 | 0,6 | A |
| Erf. 7 | 2,0 | 68,4 | 0,41 | 0,5 | A |
|  | 4,0 | 32,7 | 0,38 | 0,5 | A |
| Erf. 8 | 2,0 | 63,5 | 0,40 | 0,5 | A |
|  | 4,0 | 30,7 | 0,38 | 0,5 | A |
| Vgl. 4g | 2,0 | 71,4 | 0,47 | 0,4 | B |
|  | 4,0 | 32,8 | 0,47 | 0,5 | B |
| Vgl. 5g | 2,0 | 60,0 | 0,41 | 0,5 | C |
|  | 4,0 | 24,7 | 0,38 | 0,5 | C |
| Vgl. 7g | 2,0 | 71,1 | 0,45 | 0,5 | B |
|  | 4,0 | 33,3 | 0,43 | 0,5 | C |
| Vgl. 1g | 2,0 | 72,0 | 0,45 | 0,5 | C |
|  | 4,0 | 38,3 | 0,43 | 0,5 | C |

Die erfindungsgemäßen Beispiele (Erf. 5-8) aus Tabelle 7 zeigen im Vergleich mit den Vergleichssubstanzen (Vgl. 1g/4g/6g/13g) einen geringen Gleitreibungskoeffizienten und eine hohe Kratzbeständigkeit. Zudem haben einen Einfluss auf den Glanz des 1-K PUR-Lacks.

**Beispiel 4: Lösemittelhaltiger 2-K PUR-Lack**

**1. Komponente**

| | |
|---|---|
| i) Desmophen 1300 / 75 %ig in Xylol | 32,0 Gew.-% |
| ii) Walsroder Nitrocellulose E 510 in 20% ESO | 1,5 Gew.-% |
| iii) Acronal 4 L 10%ig in Ethylacetat | 0,2 Gew.-% |
| iv) Baysilone OL 17 10%ig in Xylol | 0,2 Gew.-% |
| v) Ethylacetat | 10,4 Gew.-% |
| vi) n-Butylacetat | 11,0 Gew.-% |
| vii) Methoxypropylacetat | 10,8 Gew.-% |
| viii) Xylol | 8.9 Gew.-% |
| | 75,0 Gew.-% |

• **2. Komponente**

| | |
|---|---|
| i) Desmodur IL BA | 14,2 Gew.-% |
| ii) Desmodur L 75 | 9,4 Gew.-% |
| iii) Xylol | 1.4 Gew.-% |

(fortgesetzt)

| | 25,0 Gew.-% |
|---|---|
| Zugabe von mWA zum Grund-Lack | 2,0 Gew.-% / 4,0 Gew.-% |

Der Lack wurde unter Verwendung eines Propellerrührers in der dargestellten Reihenfolge hergestellt.

Die Bestandteile der ersten Komponente wurden in einem geeigneten Gefäß mit einem Propellerrührer für mehrere Stunden (bis Nitrocellulose gelöst) bei ca. 1000 rpm homogenisiert. Die Bestandteile der zweiten Komponente wurden separat in einem geeigneten Gefäß unter händischem Rühren homogenisiert. Der Lack wird im Ultraschallbad entgast. Die Lackherstellung erfolgte durch händisches Verrühren von Komponente 1 und 2 direkt vor dem Lackauftrag auf die Substrate.

Das mikronisierte Wachsadditiv wurden zuvor der Komponente 1 zugegeben (bei 500 rpm), und an einem Dissolver bei 2000 rpm für 20 min eingearbeitet.

Zur Herstellung der Proben wurden Nassfilme von 60 $\mu$m auf Glasplatten aufgerakelt. Die Prüfkörper zur Prüfung der Haptik wurden durch einen dreischichtigen Pinselauftrag (Kreuzgang) mit Zwischenschliff auf unbehandelte Vollholzplatten hergestellt.

Die Prüfung erfolgte nach 48h Trocknungszeit im Klimaraum bei 23°C und einer Luftfeuchtigkeit von 50%.

**Prüfung in einem lösemittelhaltigen 2-komponentigen PUR Lack:**

Die Wirkung von mWA wird durch den Glanz, Gleitreibungskoeffizient sowie die Scheuerfestigkeit in der oben angegebenen Richtformulierung quantifiziert. Für Glanzperformance und Gleitreibungskoeffizienten sind in 2-K PUR-Lacken verhältnismäßig niedrige Werte wünschenswert. Bei der Kratzbeständigkeit sind in 2-K PUR-Lacken hohe Werte wünschenswert.

Tabelle 8: Anwendungstests - 2-K PUR-Lack, mWA mit $d_{50}$ von ca. 8 $\mu$m

| Eingesetztes mWA (Probe) | Eingesetzte Menge [Gew.-%] | Glanz @ 60° | Gleitreibungskoeffizient [rel.] | Kratzbeständigkeit | Haptik |
|---|---|---|---|---|---|
| Erf. 1 | 2,0 | 72,6 | 0,44 | 1,3 | A |
| | 4,0 | 40,3 | 0,40 | 1,3 | A |
| Erf. 2 | 2,0 | 62,9 | 0,42 | 1,4 | A |
| | 4,0 | 36,5 | 0,39 | 1,6 | A |
| Erf. 3 | 2,0 | 62,1 | 0,43 | 1,3 | A |
| | 4,0 | 32,5 | 0,38 | 1,4 | A |
| Erf. 4 | 2,0 | 69,8 | 0,41 | 1,3 | A |
| | 4,0 | 32,6 | 0,39 | 1,5 | A |
| Vgl. 5 | 2,0 | 74,0 | 0,45 | 1,2 | B |
| | 4,0 | 41,7 | 0,40 | 1,4 | B |
| Vgl. 4 | 2,0 | 66,5 | 0,46 | 0,8 | C |
| | 4,0 | 31,1 | 0,38 | 1,0 | C |
| Vgl. 1 | 2,0 | 66,0 | 0,41 | 1,3 | B |
| | 4,0 | 33,4 | 0,39 | 1,4 | B |
| Vgl. 8 | 2,0 | 72,9 | 0,45 | 0,9 | B |
| | 4,0 | 38,0 | 0,39 | 1,3 | B |
| Vgl. 9 | 2,0 | 74,1 | 0,45 | 1,0 | B |
| | 4,0 | 42,2 | 0,41 | 1,2 | B |
| Vgl. 7 | 2,0 | 72,6 | 0,46 | 0,9 | C |
| | 4,0 | 35,5 | 0,41 | 1,3 | C |

Tabelle 9: Anwendungstests - 2-K PUR-Lack, mWA mit $d_{50}$ von ca. 12 $\mu$m

| Eingesetztes mWA (Probe) | eingesetzte Menge [Gew.-%] | Glanz @ 60° | Gleitreibungskoeffizient [rel.] | Kratzbeständigkeit | Haptik |
|---|---|---|---|---|---|
| Erf. 5 | 2,0 | 75,1 | 0,48 | 1,2 | A |
|  | 4,0 | 40,2 | 0,45 | 1,2 | A |
| Erf. 6 | 2,0 | 72,2 | 0,48 | 1,3 | A |
|  | 4,0 | 36,4 | 0,45 | 1,5 | A |
| Erf. 7 | 2,0 | 71,5 | 0,48 | 1,6 | A |
|  | 4,0 | 34,8 | 0,43 | 1,2 | A |
| Erf. 8 | 2,0 | 70,5 | 0,47 | 1,2 | A |
|  | 4,0 | 33,6 | 0,42 | 1,2 | A |
| Vgl. 4g | 2,0 | 70,3 | 0,48 | 1,2 | C |
|  | 4,0 | 35,2 | 0,44 | 1,2 | C |
| Vgl. 5g | 2,0 | 69,3 | 0,44 | 1,1 | B |
|  | 4,0 | 35,9 | 0,40 | 1,1 | B |
| Vgl. 7g | 2,0 | 80,6 | 0,49 | 1,0 | C |
|  | 4,0 | 41,5 | 0,44 | 1,2 | C |
| Vgl. 1g | 2,0 | 71,6 | 0,45 | 1,3 | C |
|  | 4,0 | 39,7 | 0,43 | 1,3 | C |

Die erfindungsgemäßen Beispiele (Erf. 1-8) aus Tabelle und Tabelle zeigen im Vergleich zu den Vergleichssubstanzen (Vgl. 1/1g/4/4g/6/6g/9/10/13/13g) einen geringeren Glanz bzw. einen Mattierungseffekt bei gleichzeitig niedrigem Gleitreibungskoeffizienten, hoher Kratzbeständigkeit und für Holzlacke wichtige Haptik.

**Patentansprüche**

1.   Reiskleiewachsoxidate für Wachsadditive, wobei diese optional durch ein Verfahren ausgewählt aus der Gruppe umfassend Hydrolyse, Alkoholyse, Veresterung, Amidierung, Verseifung, Ethoxylierung, Anhydridbildung und Decarboxylierung derivatisiert wurden, **dadurch gekennzeichnet, dass** sie eine volumenmittlere Partikelgröße $d_{50}$ zwischen 1 - 50 $\mu$m, bevorzugt 5 - 15 $\mu$m, besonders bevorzugt 7,0 - 13,0 $\mu$m, gemessen nach ISO 13320-1 besitzen.

2.   Reiskleiewachsoxidate gemäß Anspruch 1, **dadurch gekennzeichnet, dass** die Derivatisierung eine Verseifung ist.

3.   Reiskleiewachsoxidate gemäß einem oder mehreren der vorhergehenden Ansprüche, **dadurch gekennzeichnet, dass** sie eine Säurezahl zwischen 1 und 140 mg KOH/g, bevorzugt zwischen 2 und 80 mg KOH/g, besonders bevorzugt zwischen 3 und 60 mg KOH/g, gemessen nach ISO 2114, aufweisen.

4.   Reiskleiewachsoxidate gemäß einem oder mehreren der vorhergehenden Ansprüche, **dadurch gekennzeichnet, dass** sie eine Verseifungszahl zwischen 30 und 185 mg KOH/g, bevorzugt zwischen 50 und 130 mg KOH/g, besonders bevorzugt zwischen 60 und 110 mg KOH/g, gemessen nach ISO 3681, aufweisen.

5.   Reiskleiewachsoxidate gemäß einem der vorhergehenden Ansprüche, **dadurch gekennzeichnet, dass** sie einen Tropfpunkt zwischen 70 und 110 °C, gemessen nach ISO 2176, aufweisen.

6.   Reiskleiewachsoxidate gemäß einem der vorhergehenden Ansprüche, **dadurch gekennzeichnet, dass** diese mit Chromschwefelsäure, bevorzugt mit einer Mischung aus Chromtrioxid und Schwefelsäure hergestellt wurden.

7.   Mikronisiertes Wachsadditiv für Druckfarben- und Lacksysteme, umfassend ein oder mehrere optional derivatisierte Reiskleiewachsoxidate gemäß einem der oder mehreren der Ansprüche 1 - 6.

8. Mikronisiertes Wachsadditiv gemäß Anspruch 7, **dadurch gekennzeichnet, dass** die ein oder mehreren, optional derivatisierten Reiskleiewachsoxidate in einer Menge von 40 - 100 Gew.-%, bezogen auf die Gesamtmasse des Wachsadditivs, enthalten sind.

9. Mikronisiertes Wachsadditiv gemäß einem oder mehreren der Ansprüche 7 - 8, **dadurch gekennzeichnet, dass** das mikronisierte Wachsadditiv einen Renewable Carbon Index (RCI) von 80 - 100% aufweist.

10. Verfahren zur Herstellung von Reiskleiewachsoxidaten gemäß einem der Ansprüche 1 - 6 oder von einem mikronisierten Wachsadditiv gemäß einem der Ansprüche 7 - 9, **dadurch gekennzeichnet, dass** die enthaltenen Komponenten gemeinsam auf einer Mühle bis zu einer volumenmittleren Partikelgröße $d_{50}$ zwischen 1 und 50 $\mu$m, gemessen nach ISO 13320-1, vermahlen werden.

11. Verfahren gemäß Anspruch 10, wobei es sich bei der Mühle um eine Pralltellermühle oder um eine Luftstrahlmühle, bevorzugt um eine Luftstrahlmühle, handelt.

12. Verwendung von einem mikronisierten Wachsadditiv gemäß einem der Ansprüche 7 - 9, für Druckfarben, Beschichtungen und Lacke.

13. Verwendung gemäß Anspruch 12, **dadurch gekennzeichnet, dass**

- es sich bei den Druckfarben um eine Offset-Druckfarbe oder um eine Flexodruckfarbe, bevorzugt um eine ölbasierte Offset-Druckfarbe oder um eine wasserbasierte Flexodruckfarbe handelt, oder
- es sich bei den Lacken um einen Pulverlack oder einen Holzlack oder um ein 1 K PUR Lacksystem oder um ein 2 K PUR Lacksystem, bevorzugt um ein wasserbasiertes 1 K PUR Lacksystem oder um ein wasserbasiertes 2 K PUR Lacksystem, ganz besonders bevorzugt um ein wasserbasiertes 2 K PUR Lacksystem handelt.

14. Verwendung gemäß einem oder mehreren der Ansprüche 12 - 13, **dadurch gekennzeichnet, dass** das mikronisierte Wachsadditiv in einer Menge von 0,1 - 10,0 Gew.-%, bevorzugt in einer Menge von 0,2 - 4,0% Gew.-%, bezogen auf die Gesamtmasse der Druckfarbe, der Beschichtung oder des Lacks, eingesetzt wird.

15. Verwendung gemäß einem oder mehreren der Ansprüche 12 - 14, **dadurch gekennzeichnet, dass** das mikronisierte Wachsadditiv direkt oder als Dispersion zur Druckfarbe, zur Beschichtung oder zum Lack gegeben wird.

16. Verwendung gemäß einem oder mehreren der Ansprüche 12 - 15, **dadurch gekennzeichnet, dass** eine Dispersion eines Dispergens mit den mikronisierten Wachsadditiven oder mikronisierten Reiskleiewachsoxidate hergestellt wird, welche dann zur Druckfarbe, zur Beschichtung oder zum Lack gegeben wird.

17. Verwendung des mikronisierten Wachsadditivs gemäß einem der Ansprüche 7-9 als

- Entgasungs-, Verlaufs-, Gleit- und/oder Dispergierungshilfsmittel für Kunststoffe, oder
- Hydrophobierungsadditiv in Pflanzenschutzpräparationen.

EUROPÄISCHER RECHERCHENBERICHT

Nummer der Anmeldung

EP 20 18 1497

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | JP 2010 020304 A (TOSHIBA CORP; TOSHIBA TEC KK) 28. Januar 2010 (2010-01-28) * das ganze Dokument * ----- | 1-17 | INV. C08L91/00 C09D191/00 A01N65/00 |
| Y,D | WO 2014/060082 A1 (CLARIANT INT LTD [CH]) 24. April 2014 (2014-04-24) * Seite 8, Zeile 18 - Zeile 24; Beispiel 1 * * Seite 10, Zeile 32 - Seite 11, Zeile 6 * * das ganze Dokument * ----- | 1-17 | B41M1/06 C09D11/12 C09D175/04 C10M105/42 |
| Y | Anonymous: "Micronized rice bran wax (Podax), product data", , 1. Januar 2020 (2020-01-01), Seiten 1-4, XP055746561, Gefunden im Internet: URL:https://www.podax.com.cn/en/sub_products/natural-wax-en/ [gefunden am 2020-11-03] * das ganze Dokument * ----- | 1-17 | |
| Y | Anonymous: "SPECIALTY FINE POWDERS AND EXFOLIANTS", , 1. April 2019 (2019-04-01), Seiten 1-20, XP055746565, Gefunden im Internet: URL:https://www.cerasuniversales.com/assets/Marcas-Ceras-Universales.pdf [gefunden am 2020-11-03] * Naturesoft 860R; Seite 3 * ----- -/-- | 1-17 | RECHERCHIERTE SACHGEBIETE (IPC) C08L C10M C09D A01N B41M |

Der vorliegende Recherchenbericht wurde für alle Patentansprüche erstellt

| Recherchenort | Abschlußdatum der Recherche | Prüfer |
|---|---|---|
| München | 5. November 2020 | olde Scheper, Bernd |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Seite 1 von 5

Europäisches
Patentamt

European
Patent Office

Office européen
des brevets

**EUROPÄISCHER RECHERCHENBERICHT**

Nummer der Anmeldung

EP 20 18 1497

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Anonymous: "Printing Inks & OPV's (brochure)", <br><br>1. April 2020 (2020-04-01), Seiten 1-2, XP055746567, Gefunden im Internet: URL:http://www.micropowders.com/Files/brochures/PrintingInks.pdf [gefunden am 2020-11-03] * NatureFine R331; Seite 1 - Seite 2 * <br>----- | 1-17 | |
| Y | Anonymous: "NatureFine R331 (Rice bran wax), product data sheet", <br><br>1. April 2020 (2020-04-01), Seiten 1-1, XP055746570, Gefunden im Internet: URL:http://www.micropowders.com/Files/TDS/NatureFine%20R331%20TDS.pdf [gefunden am 2020-11-03] * das ganze Dokument * <br>----- | 1-17 | |
| Y | Anonymous: "Wax Additives for Seed Coatings and Agrochemicals (NatureFine R331)", <br><br>1. September 2019 (2019-09-01), Seite 1, XP055746575, Gefunden im Internet: URL:http://67.199.103.45/Files/brochures/SeedCoatingsBulletin2015.pdf [gefunden am 2020-11-03] * das ganze Dokument * <br>----- | 1-17 | RECHERCHIERTE SACHGEBIETE (IPC) |

-/--

Der vorliegende Recherchenbericht wurde für alle Patentansprüche erstellt

| Recherchenort | Abschlußdatum der Recherche | Prüfer |
|---|---|---|
| München | 5. November 2020 | olde Scheper, Bernd |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...................................................................................
& : Mitglied der gleichen Patentfamilie, übereinstimmendes
   Dokument

EPO FORM 1503 03.82 (P04C03)

Seite 2 von 5

Europäisches
Patentamt

European
Patent Office

Office européen
des brevets

**EUROPÄISCHER RECHERCHENBERICHT**

Nummer der Anmeldung

EP 20 18 1497

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Anonymous: "Naturesoft 860R (rice bran wax powder)", , 1. April 2019 (2019-04-01), Seite 1, XP055746580, Gefunden im Internet: URL:http://www.mpipersonalcare.com/Files/brochures/Naturesoft860R.pdf [gefunden am 2020-11-03] * das ganze Dokument * ----- | 1-17 | |
| Y | Cl Anonymous: "High Performance Wax Additives", , 1. April 2020 (2020-04-01), Seiten 1-8, XP055746593, Gefunden im Internet: URL:http://www.micropowders.com/Files/brochures/8page.pdf [gefunden am 2020-11-03] * NatureFine R331; Seite 2 * * Seite 8 * ----- | 1-17 | |
| T | Anonymous: "High Performance Wax Additives", , 1. April 2018 (2018-04-01), Seiten 1-8, XP055746599, Gefunden im Internet: URL:http://www.micropowders.com/brochures/corporate-brochure.pdf [gefunden am 2020-11-03] * Seite 8 * ----- -/-- | | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 5. November 2020 | olde Scheper, Bernd |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
    Dokument

EPO FORM 1503 03.82 (P04C03)

Seite 3 von 5

Europäisches
Patentamt

European
Patent Office

Office européen
des brevets

**EUROPÄISCHER RECHERCHENBERICHT**

**Nummer der Anmeldung**

EP 20 18 1497

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2014/060081 A1 (CLARIANT INT LTD [CH]) 24. April 2014 (2014-04-24) * Seite 1, Zeile 5 - Zeile 9 * * Ansprüche 1-26; Beispiele 1-8 * * das ganze Dokument * ----- | 1-17 | |
| Y | DE 10 2018 116113 A1 (VOELPKER SPEZIALPRODUKTE GMBH [DE]) 9. Januar 2020 (2020-01-09) * Absatz [0001]; Ansprüche 1-10; Beispiele 1,2,4,5 * * das ganze Dokument * ----- | 1-17 | |
| Y | WO 2015/117757 A1 (CLARIANT INT LTD [CH]) 13. August 2015 (2015-08-13) * Seite 1, Zeile 1 - Zeile 9; Ansprüche 1,6,7,13; Beispiel 3 * * Seite 16, Zeile 24 - Zeile 30 * * Seite 13, Zeile 22 - Zeile 27 * * das ganze Dokument * ----- | 1-17 | |
| Y | WO 2014/131514 A1 (CLARIANT INT LTD [CH]) 4. September 2014 (2014-09-04) * Seite 1, Zeile 1 - Zeile 8; Ansprüche 6-9,14-19; Beispiel 3 * * Seite 5, Zeile 10 - Zeile 20 * * Seite 6, Zeile 31 - Seite 10, Zeile 14 * * Seite 11, Zeile 2 - Zeile 31 * ----- | 1-17 | RECHERCHIERTE SACHGEBIETE (IPC) |
| Y | WO 2017/009408 A1 (CLARIANT INT LTD [CH]) 19. Januar 2017 (2017-01-19) * Seite 7, Zeile 23 - Seite 8, Zeile 6; Beispiele 12,13 * * das ganze Dokument * ----- | 1-17 | |

-/--

Der vorliegende Recherchenbericht wurde für alle Patentansprüche erstellt

| Recherchenort | Abschlußdatum der Recherche | Prüfer |
|---|---|---|
| München | 5. November 2020 | olde Scheper, Bernd |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 20 18 1497

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Anonymous: "Fließbettstrahlmühle", , 17. Januar 2018 (2018-01-17), Seiten 1-2, XP055746647, Gefunden im Internet: URL:https://de.wikipedia.org/wiki/Fliessbettgegenstrahlmühle [gefunden am 2020-11-03] * das ganze Dokument * ----- | 10,11 | |
| Y | EP 2 643 434 A1 (SASOL WAX GMBH [DE]) 2. Oktober 2013 (2013-10-02) * das ganze Dokument * ----- | 10,11 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 5. November 2020 | olde Scheper, Bernd |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
    Dokument

EPO FORM 1503 03.82 (P04C03)

Seite 5 von 5

**ANHANG ZUM EUROPÄISCHEN RECHERCHENBERICHT**
**ÜBER DIE EUROPÄISCHE PATENTANMELDUNG NR.**

EP 20 18 1497

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-11-2020

| Im Recherchenbericht angeführtes Patentdokument | Datum der Veröffentlichung | Mitglied(er) der Patentfamilie | Datum der Veröffentlichung |
|---|---|---|---|
| JP 2010020304 A | 28-01-2010 | KEINE | |
| WO 2014060082 A1 | 24-04-2014 | BR 112015006768 A2 | 04-07-2017 |
| | | CN 104640930 A | 20-05-2015 |
| | | EP 2909273 A1 | 26-08-2015 |
| | | ES 2602279 T3 | 20-02-2017 |
| | | JP 6371292 B2 | 08-08-2018 |
| | | JP 2016500054 A | 07-01-2016 |
| | | KR 20150076218 A | 06-07-2015 |
| | | MX 347115 B | 11-04-2017 |
| | | US 2015247039 A1 | 03-09-2015 |
| | | WO 2014060082 A1 | 24-04-2014 |
| WO 2014060081 A1 | 24-04-2014 | BR 112015008275 A2 | 04-07-2017 |
| | | CN 104619781 A | 13-05-2015 |
| | | EP 2909274 A1 | 26-08-2015 |
| | | ES 2607146 T3 | 29-03-2017 |
| | | JP 6371291 B2 | 08-08-2018 |
| | | JP 2015536356 A | 21-12-2015 |
| | | KR 20150076219 A | 06-07-2015 |
| | | MX 345147 B | 17-01-2017 |
| | | US 2015284661 A1 | 08-10-2015 |
| | | WO 2014060081 A1 | 24-04-2014 |
| DE 102018116113 A1 | 09-01-2020 | KEINE | |
| WO 2015117757 A1 | 13-08-2015 | DE 102014001709 A1 | 13-08-2015 |
| | | EP 3102292 A1 | 14-12-2016 |
| | | WO 2015117757 A1 | 13-08-2015 |
| WO 2014131514 A1 | 04-09-2014 | DE 102013003366 A1 | 04-09-2014 |
| | | WO 2014131514 A1 | 04-09-2014 |
| WO 2017009408 A1 | 19-01-2017 | BR 112018000043 A2 | 04-09-2018 |
| | | CN 107835842 A | 23-03-2018 |
| | | EP 3322754 A1 | 23-05-2018 |
| | | JP 6622901 B2 | 18-12-2019 |
| | | JP 2018520245 A | 26-07-2018 |
| | | US 2018237639 A1 | 23-08-2018 |
| | | WO 2017009408 A1 | 19-01-2017 |
| EP 2643434 A1 | 02-10-2013 | BR 112013012166 A2 | 16-08-2016 |
| | | CA 2817394 A1 | 31-05-2012 |
| | | CN 103237873 A | 07-08-2013 |
| | | DE 102010052028 A1 | 24-05-2012 |
| | | EP 2643434 A1 | 02-10-2013 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT
ÜBER DIE EUROPÄISCHE PATENTANMELDUNG NR.**

EP 20 18 1497

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-11-2020

| Im Recherchenbericht angeführtes Patentdokument | Datum der Veröffentlichung | Mitglied(er) der Patentfamilie | Datum der Veröffentlichung |
|---|---|---|---|
| | | JP 5857063 B2 | 10-02-2016 |
| | | JP 2014501807 A | 23-01-2014 |
| | | KR 20140000291 A | 02-01-2014 |
| | | PL 2643434 T3 | 31-03-2017 |
| | | US 2013323508 A1 | 05-12-2013 |
| | | WO 2012069041 A1 | 31-05-2012 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2010020304 A

- EP 2909273 A